# EUROPÄISCHE PATENTSCHRIFT

(11) **EP 2 310 664 B1**
(45) Veröffentlichungstag und Bekanntmachung des Hinweises auf die Patenterteilung: **21.12.2011**
(21) Anmeldenummer: 09776966.5
(22) Anmeldetag: 03.07.2009
(51) Int. Cl.: F03B 13/10, F03B 17/06

(54) **MONTAGEVERFAHREN FÜR EIN UNTERWASSERKRAFTWERK**
METHOD OF ASSEMBLING A SUBMERGED POWER STATION
PROCEDE DE MONTAGE D'UNE CENTRALE ELECTRIQUE SUBMERGEE

(30) Priorität: 07.07.2008 DE 102008031615
(43) Veröffentlichungstag der Anmeldung: 20.04.2011
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE)
(74) Vertreter: Dr. Weitzel & Partner
(86) Internationale Anmeldenummer: PCT/EP2009/004855
(87) Internationale Veröffentlichungsnummer: WO 2010/003604

(56) Entgegenhaltungen:
- WO-A2-2007/125349
- DE-A1- 3 223 668
- GB-A- 2 431 628

## Beschreibung

Die Erfindung betrifft ein Montage verfahren für ein Unterwasserkraftwerk.

In einer Gewässerströmung freistehende Unterwasserkraftwerke, insbesondere zur Energieerzeugung aus einer Gezeitenströmung, sind bekannt. Eine typische Bauform umfasst eine an einer Maschinengondel umlaufende, propellerförmige Wasserturbine. Dabei wird die Maschinengondel von einer auf dem Gewässergrund fundamentierten Stützstruktur getragen oder als schwimmfähige Einheit durch eine Verankerung auf einer vorbestimmten Tauchtiefe gehalten. Für eine hinreichend große Ausbildung derartiger Unterwasserkraftwerke können bereits relativ langsame Strömungen für die Energiegewinnung ausgenutzt werden. Hierzu ist typischerweise in der Maschinengondel ein elektrischer Generator vorgesehen, der wenigstens mittelbar von der Wasserturbine angetrieben wird.

Die DE 3223668 offenbart ein derartiges Unterwasserkraftwerk.

Um im Antriebsstrang des Unterwasserkraftwerks auf ein wartungsanfälliges Getriebe verzichten zu können, wurden direkt getriebene elektrische Generatoren vorgeschlagen, wobei der hieraus resultierende Langsamlauf des Generatorläufers durch dessen hochpolige Ausbildung kompensiert wird. Die aus diesem Ansatz resultierenden elektrischen Generatoren für ein gattungsgemäßes Unterwasserkraftwerk sind allerdings großbauend und schwer. Dies führt zu einem hohen Montageaufwand, insbesondere für eine Vorortmontage an Bord eines Wasserfahrzeugs am Installationsort der Anlage.

Des Weiteren werden zur Ausbildung des hochpoligen Generatorläufers Hochleistungspermanentmagnete verwendet, sodass die Notwendigkeit besteht, zum Transport und der Handhabung eines Generatorläufers eine Permanentmagnetsicherung vorzusehen. Zusätzlich führt ein Anlagenkonzept mit einem wasserdicht gekapselten elektrischen Generator mit einem umschließenden Gehäuse und einer Wellendichtung zu einer weiteren Erschwernis der Montage.

Für die voranstehend dargelegte Anlagenkonzeption wird beispielhaft auf die WO 2007/125349 A2 sowie die WO 2007/017629 A1 verwiesen. Aus diesen Druckschriften geht eine Wellenlagerung hervor, die in Axialrichtung gesehen zu beiden Seiten des elektrischen Generators angeordnet ist. Für eine solche Konstruktion wird die Lagerjustage üblicherweise mit einem auf die Antriebswelle aufgesetzten Generatorläufer vorgenommen. Dabei ist das Eigengewicht des elektrischen Generators bei der Lagereinstellung hinderlich. Ferner können insbesondere bei einer Generatorläuferausbildung mit Permanentmagneten unerwünschte magnetische Kräfte einen störenden Einfluss auf die Zentrierung der zu lagernden Komponenten und die Lagerjustage haben.

Der Erfindung liegt die Aufgabe zugrunde, ein gattungsgemäßes Unterwasserkraftwerk so auszubilden, dass dessen Montage im Hinblick auf den Transport und die Handhabbarkeit einzelner Bauteile verbessert wird und sich das Zusammenführen und die Justage, insbesondere die Lagerjustage, der Anlagenkomponenten vereinfacht.

Die der Erfindung zugrunde liegende Aufgabe wird durch die Merkmale des unabhängigen Anspruchs gelöst.

Für ein nacht beauspruchtes Unterwasserkraftwerk ist eine als Ganzes handhabbare und als Einheit montierbare Generator-Baueinheit vorgesehen.

Diese umfasst mit dem Generatorläufer und dem Generatorstator die Grundkomponenten des elektrischen Generators. Zusätzlich ist ein Generatorgehäuse Teil der Generator-Baueinheit. Für eine vorteilhafte Ausgestaltung können die Steuerungs- und Leistungskomponenten des elektrischen Generators zusätzlich in die Generator-Baueinheit aufgenommen werden. Für eine weitere bevorzugte Ausgestaltung liegen in der Generator-Baueinheit Vorrichtungen zur Kühlung der Generatorkomponenten vor.

Die Generator-Baueinheit wird für den Transport und die Lagerung vorzugsweise mit einer Transportsicherung versehen, die sowohl die Relativlage der vorzugsweise vorzentrierten Generatorkomponenten sichert, als auch den Schutz von Permanentmagneten bewirkt. Insbesondere ist für die Transportsicherung ein in den Luftspalt zwischen dem Generatorläufer und dem Generatorstator eingreifendes Element vorgesehen. Ein zusätzlicher Schutz wird durch die wenigstens teilweise Umhüllung der Komponenten des Generatorstators und des Generatorläufers durch das Generatorgehäuse bewirkt.

Um die Generator-Baueinheit als eine zusammenhängende Einheit zu montieren, sind Verbindungsmittel zur Ankopplung des Generatorläufers an eine Antriebswelle des Unterwasserkraftwerks und zur Ankopplung des Generatorgehäuses an einen angrenzenden Gondelgehäuseabschnitt vorgesehen. Ferner ist das Unterwasserkraftwerk bevorzugt so angelegt, dass die Generator-Baueinheit axial an die Antriebswelle anschließt. Demnach wird für eine bevorzugte Ausgestaltung die Antriebswelle einteilig ausgebildet. Auf der Eingangsseite wird eine drehfeste Verbindung zur Wasserturbine und auf der Ausgangsseite eine entsprechend drehfeste Verbindung zum Generatorläufer hergestellt. Nach der Ankopplung der Generator-Baueinheit stützt sich diese gegen die benachbart liegende Abschnitte des Gondelgehäuses ab.

Für eine alternative Ausgestaltung kann die Antriebswelle unterteilt, d. h. zweiteilig ausgebildet sein. Für eine solche Gestaltung kann die Generator-Baueinheit zwischen zwei Wellenteilstücke eingesetzt werden. Durch die Herstellung der drehfesten Verbindung des Generatorläufers der Generator-Baueinheit mit den beiden Wellenteilstücken zu beiden Seiten entsteht ein durchgehender Wellentrieb. Entsprechend kann für diese Ausgestaltung eine Lagerung für die Antriebswelle axial beidseitig zum Generatorläufer vorgesehen sein.

Für eine vorteilhafte Ausgestaltung der Erfindung sind für eine Austarierung der umlaufenden Einheit innerhalb der Antriebswelle Auftrieb erzeugende Volumenbereiche vorgesehen. Diese können separate Auftriebskörper oder geschlossene bzw. mit einem leichten, schwimmfähigen Material ausgefüllte Abschnitte sein. Durch die hieraus resultierenden Auftriebskräfte wird der Auftriebspunkt relativ zum Schwerpunkt der umlaufenden Einheit eingestellt, sodass die Lager entlastet bzw. gezielt vorgespannt werden können.

Für eine Weitergestaltung ist auch für die Generator-Baueinheit im montierten Zustand ein Auftriebsvolumen zugeordnet. Hierzu wird vom Generatorläufer ein Auftriebselement oder ein abgedichteter Volumenabschnitt umschlossen, die dazu dienen, dessen Schwerkraft und die hieraus resultierenden, auf die Antriebswelle und deren Lagerung eingeleiteten Momente zu verringern bzw. definiert einzustellen. Für eine mögliche Ausgestaltung entsteht das der Generator-Baueinheit zugeordnete, separate Auftriebsvolumen durch den Verschluss einer Durchgangsöffnung, die zentral im Generatorläufer angelegt ist, um einen Montagezugang zur Anbringung der Verbindungsmittel zur Antriebswelle zu ermöglichen. Nach der Ausführung der Ankopplung des Generatorläufers der Generator-Baueinheit an die Antriebswelle kann diese Durchgangsöffnung flüssigkeitsdicht abgeschlossen werden, um das gewünschte Auftriebsvolumen zu realisieren.

Die Vorteile, die sich aus einer separaten Generator-Baueinheit ergeben, sind zum einen die vereinfachte Handhabung der Generatorkomponente einschließlich des Wegfalls einer separaten Permanentmagnetsicherung, zum anderen wird die Montage dadurch erleichtert, dass dem Montageschritt der Ankopplung der Generator-Baueinheit die Erstjustage der Lagerung der Antriebswelle vorausgeht. Wie voranstehend dargelegt, kann ohne die Generatorkomponenten die Grundeinstellung der Lagerung aufgrund der geringeren Lagerpresskräfte vereinfacht werden, die sich aus dem geringeren Gewicht und dem Wegfall magnetischer Kraftwirkungen ohne die Generatorkomponenten ergibt.

Nachfolgend wird die Erfindung anhand eines Ausführungsbeispiels in Verbindung mit Figurendarstellungen genauer erläutert. In diesen ist im Einzelnen Folgendes dargestellt:
- Figur 1: zeigt ein erfindungsgemäßes Unterwasserkraftwerk im axialen Teilschnitt.
- Figur 2: zeigt für eine Ausführung gemäß Figur 1 eine Generator-Baueinheit vor der Ankopplung.
- Figur 3: zeigt für eine Ausgestaltung gemäß Figur 1 den Zustand nach Ankopplung der Generator-Baueinheit.

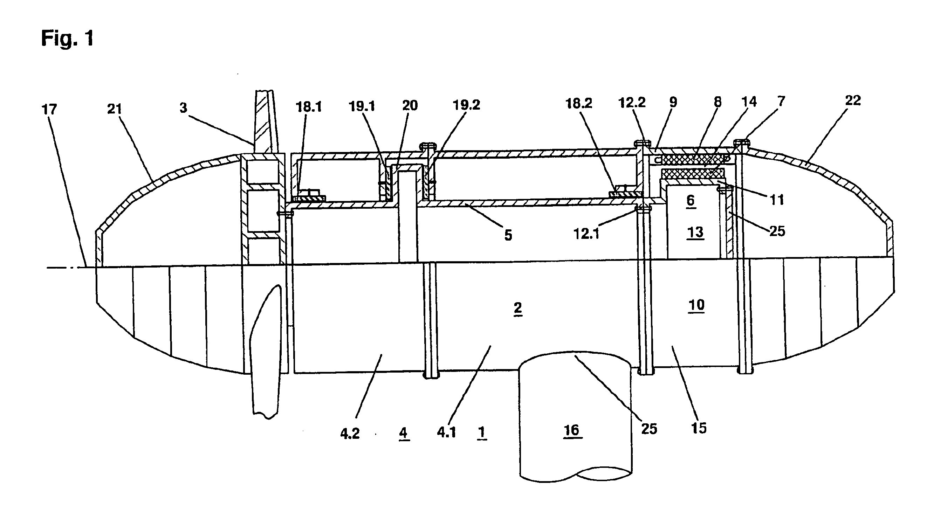

Ein Ausführungsbeispiel für ein Unterwasserkraftwerk ist in Figur 1 schematisch vereinfacht skizziert. Vorliegend wird eine Maschinengondel 1 mit segmentiertem Aufbau verwendet, die zur Aufnahme des Antriebsstrangs und des elektrischen Generators 6 dient. Erfindungsgemäß sind die Komponenten des elektrischen Generators 6, insbesondere der Generatorläufer 7 und der Generatorstator 8, zu einer Generator-Baueinheit 10 zusammengefasst, die auch das Generatorgehäuse 9 umfasst. Die Generator-Baueinheit 10 ist als Ganzes handhabbar und kann als Kompletteinheit montiert werden.

Eine weitere Grundkomponente des Untenivasserkraftwerks ist die Wasserturbine 3, die für die vorliegende Gestaltung rotorförmig angelegt ist. Die Wasserturbine 3 steht in wenigstens mittelbarer Verbindung zu einer Antriebswelle 5, wobei die Antriebswelle 5 innerhalb eines ersten Gondelgehäuseabschnitts 4 gelagert ist. Für die dargestellte Ausgestaltung sind wassergeschmierte Gleitlager vorgesehen, die vorliegend als Radiallager 18.1, 18.2 und als Axiallager 19.1, 19.2 angelegt sind. Dabei stützt sich für eine bevorzugte Ausgestaltung die Antriebswelle 5 mittels eines Spurrings 20 bidirektional in Axialrichtung gegen die Axiallager 19.1, 19.2 ab. Des Weiteren ist für das dargestellte Ausgestaltungsbeispiel die Wasserturbine 3 drehstarr mit der Antriebswelle 5 verbunden, sodass die Wasserturbine 3 durch die Antriebswelle 5 getragen wird und zusammen mit einer wasserturbinenseitigen Haube 21 eine umlaufende Einheit bildet.

Für den Transport einzelner Komponenten des Unterwasserkraftwerks zum Montageort ergibt sich ein Vorteil einer separaten Generator-Baueinheit 10 dadurch, dass insbesondere bei der Verwendung von Permanentmagneten zur Ausbildung des Generatorläufers kein zusätzlicher Permanentmagnetschutz vorzusehen ist. Stattdessen wird der Generatorläufer entsprechend seiner späteren Betriebsposition innerhalb des Generatorstators 8 angeordnet und zusätzlich radial außen vom Generatorgehäuse 9 umschlossen. Demgemäß reicht eine einfache Transportsicherung 23, die nachfolgend noch genauer im Zusammenhang mit dem erfindungsgemäßen Montageverfahren erläutert wird, für den sicheren Transport des elektrischen Generators 6 aus.

Ein weiterer Vorteil einer separaten Generator-Baueinheit 10 ist darin zu sehen, dass die Lagerung der Antriebswelle 5, für das vorliegende Ausgestaltungsbeispiel die Radiallager 18.1, 18.2 und die Axiallager 19.1, 19.2, vor der Montage der Generator-Baueinheit 10 eingestellt werden kann. Hierdurch vereinfacht sich die Grundjustage der Lagerung, da keine zusätzlichen aus dem Eigengewicht des Generatorläufers resultierenden Kräfte in das Lager eingeleitet werden. Darüber hinaus fallen zunächst magnetische Kräfte weg, die bei einer Ausbildung eines Generatorläufers mit Permanentmagneten relevant sind. Entsprechend kann die Zentrierung des Generatorläufers und Generatorstators getrennt von der Antriebswelle an einer hierfür geeigneten Vorrichtung ausgeführt werden. Sodann kann die Generator-Baueinheit 10 mittels der Transportsicherung 23 in dieser vorzentrierten Lage fixiert werden, sodass die Ankopplung der Generator-Baueinheit 10 und die Herstellung der Verbindung des Generatorläufers 7 und des Generatorstators 8 zu den anschließenden Anlagenkomponenten vereinfacht werden.

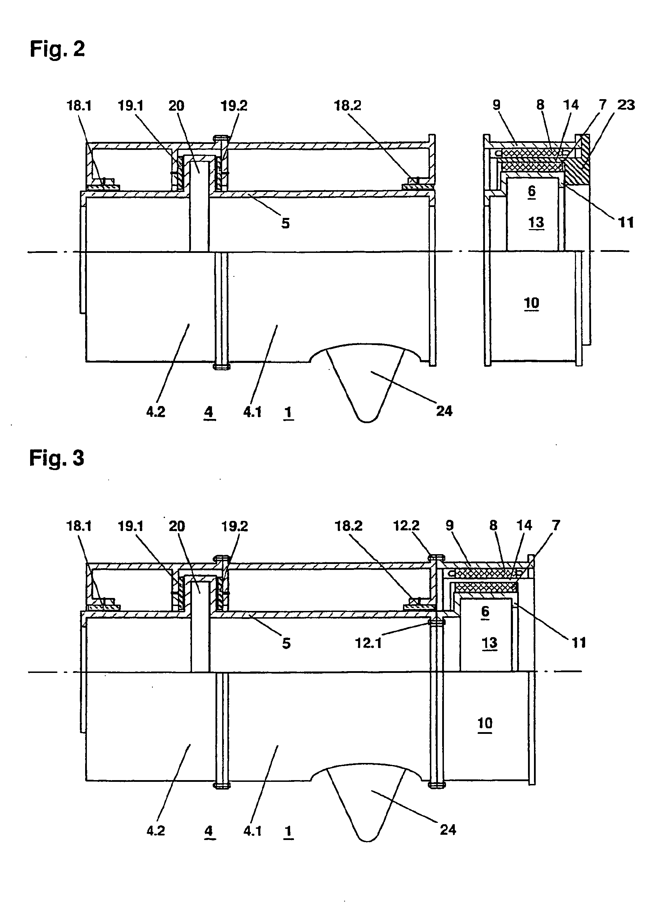

Das erfindungsgemäße Verfahren umfasst eine erste Justage der Lagerung der Antriebswelle 5 innerhalb des ersten Gondelgehäuseabschnitts 4 vor der Anbringung der als Ganzes zu handhabenden und zu montierenden Generator-Baueinheit 10. Dabei zeigt Figur 2 den Montagezustand vor dem Ankoppeln der Generator-Baueinheit. Ersichtlich ist, dass zunächst der erste Gondelgehäuseabschnitt 4 mit der darin aufgenommenen Antriebswelle 5 aufgebaut wird. Gemäß einer vorteilhaften Ausgestaltung wird hierzu zunächst die Antriebswelle 5 in ein erstes Segment 4.1 des ersten Gondelgehäuseabschnitts 4 eingeführt. Dabei kommt der Spurring 20 in Anlage mit den Lagerkörpern, die das Axiallager 19.2 bilden. Ferner wird vorteilhafterweise zunächst eine erste radiale Zentrierung mit dem Radiallager 18.2 vorgenommen. Sodann wird das zweite Segment 4.2 des ersten Gondelgehäuseabschnitts 4 aufgesetzt, sodass der Spurring 20 beidseitig durch die Axiallager 19.1 und 19.2 abgestützt wird und wenigstens in einem weiteren Bereich entlang der Antriebswelle eine radiale Abstützung erfolgt - vorliegend durch das Radiallager 18.1.

Die voranstehend beschriebene Montageabfolge vor der Ankopplung der Generator-Baueinheit 10 kann die Anbringung der Wasserturbine 3 einschließen. Diese Variante ist nicht in Figur 2 dargestellt. Denkbar ist jedoch, die Ausführung der Lagererstjustage ohne die Generator-Baueinheit 10 mit der gesamten weiteren umlaufenden Einheit einschließlich der Wasserturbine 3 und der wasserturbinenseitigen Haube 21 auszuführen.

Die zur Montage vorgesehene Generator-Baueinheit 10 weist in Figur 2 eine Transportsicherung 23 auf. Diese sichert den Generatorläufer 7 durch ein in den Luftspalt 14 zwischengeschobenes Teil radial. Zusätzlich ist der Generatorläufer 7 in Axialrichtung verliersicher durch die Transportsicherung 23 gehaltert. Entsprechend kann die Generator-Baueinheit 10 mittels eines geeigneten Kran- oder Hubsystems als eine monolithische Baueinheit vorzentriert an die im ersten Gondelgehäuseabschnitt 4 grundjustierte Antriebswelle 5 angesetzt werden. Sodann wird eine Verbindung durch die Verbindungsmittel 12.1 zwischen dem Tragkörper 11 des Generatorläufers 7 und der Antriebswelle 5 hergestellt. Eine entsprechende Verbindung erfolgt über die Verbindungsmittel 12.2 zwischen dem Generatorgehäuse 9 und dem ersten Gondelgehäuseabschnitt 4. Als Folge schließt sich der Generatorläufer 7 axial an die Antriebswelle 5 an. Nachdem die Ankopplung der Generator-Baueinheit 10 erfolgt ist, kann die Transportsicherung 23 abgenommen werden und der Generatorläufer 7 wird nach der Kopplung mit der Antriebswelle 5 von dieser getragen. Vorteilhafterweise wird dann nochmals eine Lagerjustage ausgeführt, die jedoch aufgrund der vorausgehenden Grundjustage der Lagerung für die Antriebswelle 5 vereinfacht ist. Entsprechend kann eine Nachzentrierung des Generatorstators 8 relativ zum Generatorläufer 7 am Generatorgehäuse 9 oder einer im Einzelnen nicht dargestellten Tragstruktur für den Generatorstator 8 erfolgen.

Für das dargestellte Ausgestaltungsbeispiel wird nach der Ankopplung der Generator-Baueinheit 10 die generatorseitige Haube 22 montiert. Ferner wird die Wasserturbine 3 auf die Antriebswelle aufgesetzt und befestigt. Der Zugang zu den Befestigungselementen für die Wasserturbine 3 an der Antriebswelle 5 ist bevorzugt zentral im Bereich der Nabe der Wasserturbine angelegt. Die hierfür notwendigen Zugangsöffnungen in der Nabe der Wasserturbine sind im Einzelnen nicht in den Figuren abgebildet. In einem weiteren Montageschritt erfolgt die Anbringung der wasserturbinenseitigen Haube 21, wodurch die Maschinengondel 1 komplettiert ist und auf eine Stützstruktur am Gewässergrund abgesenkt werden kann. Zur Einführung in eine Befestigungsvorrichtung an der Stützstruktur kann an der Maschinengondel 1 eine Zentrierungsvorrichtung 24 vorgesehen sein, die in den Figuren 2 und 3 skizziert ist. Dabei wird die Maschinengondel 1 vorzugsweise so an der Stützstruktur befestigt, dass die Generator-Baueinheit und die Wasserturbine auf gegenüberliegenden Seiten in Bezug auf die Befestigung an der Stützstruktur angeordnet sind, um mittels einer möglichst gleichmäßigen Gewichtsverteilung das auf die Befestigung an der Stützstruktur eingeleitete Drehmoment klein zu halten.

Bevorzugt wird zentral in der Generator-Baueinheit 10 eine Durchgangsöffnung 13 angelegt. Hierdurch werden die Verbindungsmittel 12.1 zur Ankopplung des Tragkörpers 11 des Generatorläufers 7 an der Antriebswelle 5 zugänglich. Im einfachsten Fall wird zur Ankopplung als Verbindungsmittel 12.1 eine Vielzahl von Schraubverbindungen gewählt, die nach innen weisende Flansche an der Antriebswelle 5 und dem Tragkörper 11 drehstarr miteinander verbinden. Die Durchgangsöffnung 13 kann nach der Ankopplung der Generator-Baueinheit 10 verschlossen werden, um einen vom Generatorläufer 7 abgegrenzten, wasserdichten Hohlraum zu schaffen, der als Auftriebsvolumen wirkt. In Figur 1 ist ein für diesen Zweck verwendeter Deckel 25 skizziert. Hierdurch wird im Tauchzustand der Anlage die Gewichtskraft des Generatorläufers 7 vollständig oder teilweise kompensiert, um statische Lagerpresskräfte zu verringern.

Für das dargestellte Ausführungsbeispiel stellt das Generatorgehäuse 9 der Generator-Baueinheit 10 nach der Montage einen Teil des Gondelgehäuses 2 dar, das beim Betrieb umströmt wird. Demnach bildet die Generator-Baueinheit 10 einen zweiten Gondelgehäuseabschnitt 15 der Maschinengondel 1. Denkbar sind ferner alternative Ausgestaltungen, für die die Generator-Baueinheit 10 nach der Montage innerhalb des ersten Gondelgehäuseabschnitts 4 angeordnet ist. Für eine solche, im Einzelnen nicht in den Figuren dargestellte Ausführung kann die strömungsgünstige Auslegung der Außenwandung des Gondelgehäuses 2 abweichend von der für eine einfache Generator-Baueinheit verwendeten zylindrischen Form angelegt werden. Ausgestaltungsalternativen betreffen Anlagenkonzepte mit einer Generator-Baueinheit 10, die einen Generatorläufer 7 in Form eines Außenläufers aufweisen. Für diesen Fall wird die Antriebswelle 5 ebenfalls außenlaufend als Hohlwelle ausgebildet, deren Lagerung sich bevorzugt nach radial innen gegen das Gondelgehäuse 2 abstützt. Eine solche Ausgestaltung ist im Einzelnen nicht in den Figurendarstellungen gezeigt.

Des Weiteren ist es möglich, innerhalb der Generator-Baueinheit 10 einen abgekapselten Volumenbereich für elektrische Steuerungskomponenten aufzunehmen. Dies betrifft insbesondere die Leistungselektronik, die dem elektrischen Generator 6 zugeordnet ist. Außerdem können Kühlvorrichtungen für die Generatorkomponenten in die Generator-Baueinheit aufgenommen werden.

Für eine besonders bevorzugte Ausführungsform wird der elektrische Generator 6 mit Wasser umspült ausgebildet. Dabei ist insbesondere der Luftspalt 14 zwischen dem Generatorläufer 7 und dem Generatorstator 8 geflutet und die elektrischen Leiter im Generatorstator 8 werden durch einen Verguss oder durch eine Umhüllung im Sinne eines Spaltrohrs vom wassergefluteten Bereich getrennt. Des Weiteren besteht vorzugsweise eine hydraulische Verbindung nach der Montage zwischen den gefluteten Bereichen innerhalb des ersten Gondelgehäuseabschnitts 4 mit den darin befindlichen wassergeschmierten Radiallagern 18.1, 18.2 und Axiallagern 19.1, 19.2 sowie der Wasserführung im Luftspalt 14 des elektrischen Generators 6. Demgemäß wird die verwendete Generator-Baueinheit 10 wenigstens einseitig offen gestaltet.

### Bezugszeichenliste

- 1: Maschinengondel
- 2: Gondelgehäuse
- 3: Wasserturbine
- 4: erster Gondelgehäuseabschnitt
- 4.1, 4.2: Segment
- 5: Antriebswelle
- 6: elektrischer Generator
- 7: Generatorläufer
- 8: Generatorstator
- 9: Generatorgehäuse
- 10: Generator-Baueinheit
- 11: Tragkörper
- 12.1, 12.2: Verbindungsmittel
- 13: Durchgangsöffnung
- 14: Luftspalt
- 15: zweiter Gondelgehäuseabschnitt
- 16: Stützstruktur
- 17: Drehachse
- 18.1, 18.2: Radiallager
- 19.1, 19.2: Axiallager
- 20: Spurring
- 21: wasserturbinenseitige Haube22 generatorseitige Haube
- 23: Transportsicherung
- 24: Zentrierungsvorrichtung
- 25: Deckel

## Patentansprüche

1. Montageverfahren für ein Unterwasserkraftwerk mit
1.1 einer Maschinengondel (1) umfassend ein Gondelgehäuse (2) mit einem ersten Gondelgehäuseabschnitt (4);
1.2 einer Wasserturbine (3), die mit einer Antriebswelle (5) in Triebverbindung steht, wobei die Antriebswelle (5) innerhalb des ersten Gondelgehäuseabschnitts (4) gelagert ist;
1.3 einem elektrischen Generator (6), umfassend einen Generatorläufer (7) und einen Generatorstator (8);
1.4 einem Generatorgehäuse (9);
**dadurch gekennzeichnet, dass**
1.5 der elektrische Generator (6) und das Generatorgehäuse (9) eine separate Generator-Baueinheit (10) bilden, die als Ganzes handhabbar und montierbar ist und vor der Herstellung einer Kopplung zwischen der Generator-Baueinheit (10) und der Antriebswelle (5) eine Einstellung der Lager (18.1, 18.2, 18.3, 18.4) für die Antriebswelle (5) ausgeführt wird; und
1.6 das Generatorgehäuse (9) mit dem ersten Gondelgehäuseabschnitt (4) und dem Generatorläufer (7) mit der Antriebswelle (5) drehstarr gekoppelt werden, wobei der Generatorläufer (7) nach der Kopplung von der Antriebswelle (5) getragen wird.

2. Montageverfahren nach Anspruch 1, **dadurch gekennzeichnet, dass** die Generator-Baueinheit (10) bis zur Ankopplung mit einer Transportsicherung (23) für den Generatorläufer (7) versehen ist.

3. Montageverfahren nach einem der Ansprüche 1 oder 2, **dadurch gekennzeichnet, dass** nach der Kopplung der Generator-Baueinheit (10) eine Nachjustage der Lager (18.1, 18.2, 18.3, 18.4) der Antriebswelle (5) erfolgt.

4. Montageverfahren nach einem der vorausgehenden Ansprüche, **dadurch gekennzeichnet, dass** die Generator-Baueinheit (10) axial an die Antriebswelle (5) in Bezug auf deren Drehachse (17) angekoppelt wird.

5. Montageverfahren nach einem der vorausgehenden Ansprüche, **dadurch gekennzeichnet, dass** die Verbindungsmittel (12.1, 12.2) zur Kopplung des Generatorläufers (7) mit der Antriebswelle (5) über eine zentral in der Generator-Baueinheit (10) angelegten Durchgangsöffnung (13) zugänglich sind.

6. Montageverfahren nach einem der vorausgehenden Ansprüche, **dadurch gekennzeichnet, dass** der Luftspalt (14) zwischen dem Generatorläufer (7) und dem Generatorstator (8) geflutet wird.

7. Montageverfahren nach einem der vorausgehenden Ansprüche, **dadurch gekennzeichnet, dass** der Antriebswelle (5) und/oder dem Generatorläufer (7) ein Auftriebskörper und/oder ein flüssigkeitsdicht abgekapseltes Auftriebsvolumen zugeordnet ist.

8. Montageverfahren nach einem der vorausgehenden Ansprüche, **dadurch gekennzeichnet, dass** das Generatorgehäuse (9) nach der Kopplung einen zweiten Gondelgehäuseabschnitt (15) bildet, der im Betrieb des Unterwasserkraftwerks umströmt ist.

9. Montageverfahren nach einem der vorausgehenden Ansprüche, **dadurch gekennzeichnet, dass** die Wasserturbine (3) und die Antriebswelle (5) zu einer lösbaren, drehstarr verbindbaren umlaufenden Einheit verbunden werden.

10. Montageverfahren nach einem der vorausgehenden Ansprüche, **dadurch gekennzeichnet, dass** das Gondelgehäuse (2) an einer Stützstruktur (16) befestigt wird und die Generator-Baueinheit (10) und die Wasserturbine (3) auf gegenüberliegenden Seiten in Bezug auf die Befestigung (25) an der Stützstruktur angeordnet werden.

## Claims

1. An installation method for an underwater power plant having
1.1 a nacelle (1) comprising a nacelle housing (2) having a first nacelle housing section (4);
1.2 a water turbine (3), which has a drive connection to a drive shaft (5), the drive shaft (5) being mounted inside the first nacelle housing section (4);
1.3 an electrical generator (6), comprising a generator rotor (7) and a generator stator (8);
1.4 a generator housing (9);
**characterized in that**
1.5 the electrical generator (6) and the generator housing (9) form a separate generator module (10), which can be handled and installed as a whole, and an adjustment of the bearings (18.1, 18.2, 18.3, 18.4) for the drive shaft (5) is executed before the production of a coupling between the generator module (10) and the drive shaft (5); and
1.6 the generator housing (9) is coupled in a rotationally-fixed manner to the first nacelle housing section (4) and the generator rotor (7) is coupled in a rotationally-fixed manner to the drive shaft (5), the generator rotor (7) being carried by the drive shaft (5) after the coupling.

2. The installation method according to Claim 1, **characterized in that** the generator module (10) is provided with a transport safeguard (23) for the generator rotor (7) until the coupling.

3. The installation method according to one of Claims 1 or 2, **characterized in that** a realignment of the bearings (18.1, 18.2, 18.3, 18.4) of the drive shaft (5) is performed after the coupling of the generator module (10).

4. The installation method according to one of the preceding claims, **characterized in that** the generator module (10) is coupled axially onto the drive shaft (5) in relation to its rotational axis (17).

5. The installation method according to one of the preceding claims, **characterized in that** the connection means (12.1, 12.2) for coupling the generator rotor (7) to the drive shaft (5) are accessible via a passage opening (13) located centrally in the generator module (10).

6. The installation method according to one of the preceding claims, **characterized in that** the air gap (14) between the generator rotor (7) and the generator stator (8) is flooded.

7. The installation method according to one of the preceding claims, **characterized in that** a buoyant body and/or a liquid-tight encapsulated buoyant volume is assigned to the drive shaft (5) and/or the generator rotor (7).

8. The installation method according to one of the preceding claims, **characterized in that** the generator housing (9) forms a second nacelle housing section (15), which has flow around it in operation of the underwater power plant, after the coupling.

9. The installation method according to one of the preceding claims, **characterized in that** the water turbine (3) and the drive shaft (5) are connected to form a detachable revolving unit, which is connectable in a rotationally-fixed manner.

10. The installation method according to one of the preceding claims, **characterized in that** the nacelle housing (2) is fastened on a support structure (16) and the generator module (10) and the water turbine (3) are situated on opposing sides in relation to the fastening (25) on the support structure.

## Revendications

1. Procédé de montage pour centrale immergée comprenant
1.1 une nacelle des machines (1) comportant une carcasse de nacelle (2) pourvue d'une première partie de carcasse de nacelle (4);
1.2 une turbine à eau (3), assurant une liaison motrice avec un arbre d'entraînement (5), dans lequel l'arbre d'entraînement (5) est monté à l'intérieur de la première carcasse de nacelle (4);
1.3 un générateur électrique (6), comportant un rotor de générateur (7) et un stator de générateur (8);
1.4 un carter de générateur (9);
**caractérisé en ce que**
1.5 le générateur électrique (6) et le carter de générateur (9) forment un module générateur séparé (10), qui peut être manipulé et peut être monté comme un tout et l'on règle la position des paliers (18.1, 18.2, 18.3, 18.4) pour l'arbre d'entraînement (5) avant d'assurer une liaison entre le module générateur (10) et l'arbre d'entraînement (5); et
1.6 l'on accouple de manière solidaire le carter de générateur (9) avec la première partie de carcasse de nacelle (4) et du rotor de générateur (7) avec l'arbre d'entraînement (5), le rotor de générateur (7) étant supporté par l'arbre d'entraînement (5) en aval de l'accouplement.

2. Procédé de montage selon la revendication 1, **caractérisé en ce que** le module générateur (10) est pourvu d'un système de fixation de transport (23) pour le rotor de générateur (7) jusqu'au moment de l'attelage.

3. Procédé de montage selon l'une des revendications 1 ou 2, **caractérisé en ce que** l'on reprend le réglage des paliers (18.1, 18.2, 18.3, 18.4) de l'arbre d'entraînement (5) après l'accouplement du module générateur (10).

4. Procédé de montage selon l'une quelconque des revendications précédentes, **caractérisé en ce que** l'on attèle le module générateur (10) axialement à l'arbre d'entraînement (5) par rapport à l'axe de rotation (17) de celui-ci.

5. Procédé de montage selon l'une quelconque des revendications précédentes, **caractérisé en ce que** les moyens de liaison (12.1, 12.2) servant à l'accouplement du rotor de générateur (7) avec l'arbre d'entraînement (5) sont accessibles par l'intermédiaire d'une ouverture de passage (13) disposée centralement dans le module générateur (10).

6. Procédé de montage selon l'une quelconque des revendications précédentes, **caractérisé en ce que** l'entrefer (14) est inondé entre le rotor de générateur (7) et le stator de générator (8).

7. Procédé de montage selon l'une quelconque des revendications précédentes, **caractérisé en ce qu'**un corps de flottaison et/ou un volume de flottaison encapsulé imperméable au liquide est associé à l'arbre d'entraînement (5) et/ou au rotor de générateur (7).

8. Procédé de montage selon l'une quelconque des revendications précédentes, **caractérisé en ce que** le carter de générateur (9) forme une seconde partie de carcasse de nacelle (15) après l'accouplement partie de carcasse de nacelle qui avec la centrale immergée en service est entourée par le courant.

9. Procédé de montage selon l'une quelconque des revendications précédentes, **caractérisé en ce que** la turbine à eau (3) et l'arbre d'entraînement (5) sont connectés pour constituer une unité rotative amovible, connectable de manière solidaire.

10. Procédé de montage selon l'une quelconque des revendications précédentes, **caractérisé en ce que** l'on fixe la carcasse de nacelle (2) à une structure d'appui (16) et que le module générateur (10) et la turbine à eau (3) sont disposés au niveau de la structure d'appui sur des côtés opposés par rapport au système de fixation (25).
